# FASCICULE DE BREVET EUROPEEN

(11) **EP 2 498 583 B1**
(45) Date de publication et mention de la délivrance du brevet: **03.05.2017**
(21) Numéro de dépôt: 11368004.5
(22) Date de dépôt: 07.03.2011
(51) Int. Cl.: H05B 37/02, H05B 33/08, F21L 4/00

(54) **Lampe LED dotée d' un dispositif de sécurité**
Mit einer Sicherheitsvorrichtung ausgestattete LED-Lampe
LED lamp provided with a safety device

(43) Date de publication de la demande: 12.09.2012
(73) Titulaire: ZEDEL, 38920 Crolles (FR)
(72) Inventeur: Bouffay, Boris, 38660 Saint Bernard du Touvet (FR); Maurice, Alain, 38660 Saint Hilaire du Touvet (FR)
(74) Mandataire: Schuffenecker, Thierry

(56) Documents cités:
- US-A1- 2007 098 391
- US-A1- 2008 198 586

## Description

### Domaine technique

La présente invention concerne les lampes dotées de diodes LED, et notamment une lampe frontale à LED comportant un dispositif de limitation de l'intensité lumineuse.

### Etat de la technique

L'utilisation des diodes LED (*Light Emitting Diods*) se répand dans les dispositifs d'éclairage en raison, d'une part, de leur fort pouvoir lumineux mais également de leur faible consommation électrique.

De ce fait, les LED ont tout naturellement vocation à prendre place au sein des lampes de poche mais également les lampes frontales dont l'usage se généralise pour un grand nombre d'activités tant professionnelles, que sportives ou ludiques. S'agissant des lampes frontales, ces lampes sont destinées à un éclairage de type "main libre" efficace, confortable et assurant une longévité maximale de la batterie. Pour autant ce nouveau type de lampes, en raison de la forte luminosité émise par les LEDs de puissance, est à présent susceptible d'occasionner de graves préjudices physiques aux utilisateurs mais également aux tiers en raison de la forte puissance d'émission des LEDs. La publication US 2008 0198586 A1 divulgue un dispositif respectivement un procédé selon le préambule des revendications indépendantes 1 et 11 d'une part et 7 et 14 d'autre part. La présente invention a pour objet de remédier à cette situation.

### Résumé de l'invention

Un but de la présente invention consiste à réaliser une lampe, telle qu'une lampe frontale, dotée de diodes électroluminescentes LED et dotée de fonctionnalités nouvelles susceptibles d'accroître de manière significative la sécurité d'utilisation de ces dernières.

C'est un autre but de la présente invention que de réaliser une lampe frontale dotée d'un mécanisme de protection intégré destiné à éviter un éblouissement dommageable pour l'utilisateur ou pour un tiers.

C'est un troisième but de la présente invention que de réaliser une lampe et un procédé de commande de la puissance générée par les diodes LED en fonction du risque d'éblouissement.

Ces buts sont réalisés au moyen d'une lampe comportant une ou plusieurs LEDs, et un module de puissance commandable assurant l'alimentation en courant des lampes LED. Un module de commande comporte un capteur d'image générant des images de la zone éclairée par la lampe, lesquelles images sont ensuite traitées pour permettre la détection de la présence d'un visage et notamment d'un oeil au sein d'une zone présumée dangereuse.
En réponse à cette détection, le module de commande génère un signal de commande transmis au module de puissance qui réduit alors significativement l'intensité lumineuse générée par les LEDs afin de prévenir tout dommage causé aux yeux de l'utilisateur ou d'un tiers.

Dans un mode de réalisation, le module de commande détermine la surface relative d'un visage sur l'image captée par ledit capteur d'image et procède à une réduction de l'intensité en fonction de la surface relative déterminée.

De préférence, le module de commande une interface USB pour la connexion à un ordinateur ou un micro-ordinateur.

Dans un mode de réalisation particulier, la baisse de l'intensité lumineuse et le retour à la normale de cette intensité lumineuse suivent des profils distincts commandés par ledit module de commande.

Dans un mode de réalisation particulier, on prévoit un détecteur infrarouge fonctionnant dans un spectre distinct de celui du spectre lumineux des LED et servant à générer une information supplémentaire destinée au module de commande pour la régulation de l'intensité lumineuse des LEDs.

Dans un mode de réalisation particulier, une image de référence est stockée au sein de la mémoire accessible au microprocesseur dans le but de stocker une image d'un utilisateur autorisé de la lampe et d'en autoriser le fonctionnement uniquement après comparaison de l'image capturée par ledit capteur avec ladite image de référence.

L'invention réalise également un procédé de limitation de la l'intensité lumineuse générée par une lampe de poche ou une lampe frontale, comportant une ou plusieurs diodes LED et un module de puissance commandable pour l'alimentation en courant des lampes LED. Le procédé comporte les étapes:
- la capture d'une image au moyen d'un capteur d'image et le traitement de cette image afin de détecter un visage humain et plus spécifiquement un oeil susceptible d'être localisé dans une zone présumée dangereusement car recevant une grande densité de flux lumineux, et
- en réponse à la détection d'un oeil dans ladite zone, la réduction de la puissance émise par les LED.

Dans un mode de réalisation particulier, le procédé comporte les étapes suivantes :
- la détermination de la surface relative d'un visage sur l'image captée par ledit capteur d'image, et
- une réduction de l'intensité lumineuse fonction de ladite surface déterminée.

Dans un mode de réalisation particulier, la baisse de l'intensité lumineuse et le retour à la normale de cette intensité lumineuse suivent des profils distincts.

Dans un mode de réalisation particulier, le procédé comporte en outre les étapes suivantes :
- stockage d'une image de référence est stockée au sein de la mémoire accessible au microprocesseur correspondant à un utilisateur autorisé de la lampe, et
- autoriser le fonctionnement de la lampe uniquement après comparaison de cette image avec une image capturée par le capteur d'image.

Suivant un autre aspect, l'invention permet la réalisation d'une lampe d'éclairage comportant
- une ou plusieurs diodes LED :
- un module de puissance commandable assurant l'alimentation en courant des lampes LED,
- un module de commande pour le réglage de l'intensité lumineuse générée par la lampe,
un détecteur infrarouge fonctionnant dans un spectre distinct de celui utilisée par les LED pour la détection d'un visage humain, ledit module de commande générant un signal de commande destiné à réduire l'intensité lumineuse générée par les LED lors de la détection d'un visage humain.

De préférence, le module de commande comporte une architecture à base de microprocesseur et de mémoire permettant un traitement numérique des informations générées par le détecteur infra-rouge .

Enfin, l'invention permet la réalisation d'un procédé de limitation de la l'intensité lumineuse générée par une lampe comportant une ou plusieurs diodes LED et un module de puissance commandable pour l'alimentation en courant des lampes LED, ledit procédé comportant les étapes :
- la détection d'un visage humain au moyen d'un capteur infrarouge fonctionnant dans un spectre distinct de celui utilisée par les LEDs ;
- en réponse à ladite détection, la réduction de l'intensité lumineuse générée par les LED.

Dans un mode de réalisation particulier, le procédé comporte en outre la capture et le traitement d'une image et en ce que la détection infrarouge est utilisée pour provoquer rapidement une baisse d'intensité lumineuse, suivie par une confirmation de cette baisse d'intensité réalisée au moyen d'un traitement numérique de l'image captée par ledit capteur d'image.

L'invention est particulièrement adaptée à la réalisation d'une lampe, et notamment d'une lampe d'éclairage portative telle qu'une lampe frontale.

### Description des figures

D'autres caractéristiques, but et avantages de l'invention apparaîtront à la lecture de la description et des dessins ci-après, donnés uniquement à titre d'examples non limitatifs. Sur les dessins annexés :
La figure 1 illustre un premier mode de réalisation d'une lampe dotée d'un système de protection contre l'éblouissement.
La figure 2 illustre un second mode de réalisation d'une lampe dotée d'un système de protection à base de micro-calculateur.
La figure 3 illustre un troisième mode de réalisation d'une lampe dotée d'un système de protection intégrant un capteur d'image.
La figure 4 illustre un procédé mettant en oeuvre une détection infrarouge dans le but de sécuriser le fonctionnement de la lampe de la figure 1.
La figure 5 illustre une image bi-dimensionnelle pixelisée 480x640 permettant la détection d'un oeil
La figure 6 illustre le procédé de détection d'un oeil au sein d'un rectangle 520
La figure 7 illustre un procédé de limitation de l'intensité lumineuse générée par les LED de puissance en réponse à la détection et au traitement de l'image captée par le capteur d'image de la figure 3.
La figure 8 illustre un procédé combinant la détection infrarouge et le traitement d'image dans le bus d'obtenir une sécurité renforcée dans le fonctionnement de la lampe.

### Description des modes de réalisation préférés

Les exemples qui vont être décrits à présent sont particulier adaptés à la réalisation d'une lampe de poche dotée de diodes LED de puissance, et notamment une lampe frontale.

Bien évidemment, il ne s'agit que d'un exemple particulier de réalisation et un homme du métier pourra adapter l'invention à d'autres dispositifs lumineux pour en accroître la sécurité de fonctionnement.

Afin d'illustrer la grande généralité d'application de l'invention, l'on va décrire à présent plus en détail trois modes de réalisation.

Un premier mode de réalisation est destiné à permettre la réalisation d'une lampe de poche ou d'une lampe frontale particulièrement bon marché comportant un détecteur simple à mettre en oeuvre, basé sur un capteur infra-rouge (I).

Dans un second mode de réalisation (II), le détecteur est associé avec un circuit de traitement numérique architecture autour d'un processeur.

Dans un troisième mode de réalisation - le plus sophistiqué des trois - l'on ajoutera au capteur infra-rouge ou l'on lui substituera une électronique de capture et de traitement d'images afin d'accroître l'efficacité de la protection (III).

### I. Description d'un premier mode de réalisation

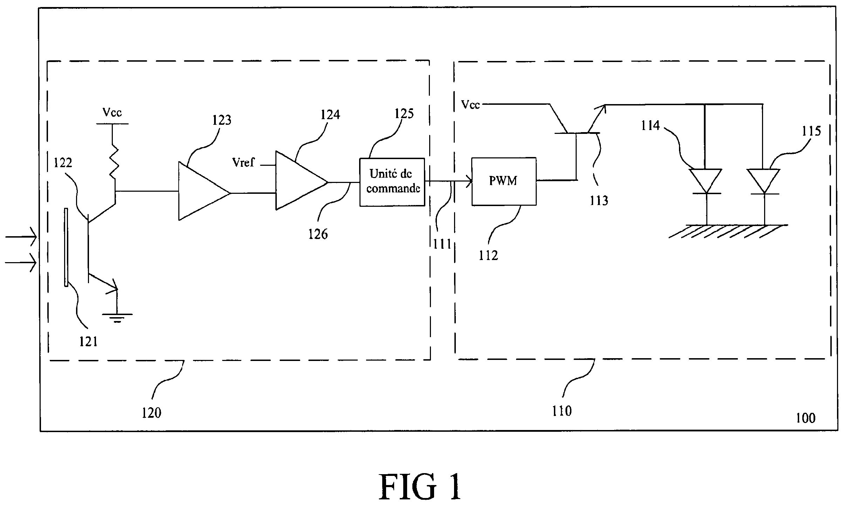

La figure 1 illustre le schéma synoptique d'un premier mode de réalisation d'une lampe 100 comprenant un module de puissance 110 associé à un module de commande 120.

Le module de puissance 110 comporte spécifiquement tous les composants que l'on trouve conventiellement dans une lampe à LEDs pour la production d'un faisceau lumineux de forte intensité.

Le circuit comporte une batterie (non représentée) générant une tension d'alimentation **Vcc**, un jeu de diodes LED (deux diodes 114 et 115 étant illustrées à titre d'exemple) alimentées par un commutateur de puissance 113 de type à semiconducteur tel qu'un transistor bipolaire, un transistor FET (*Field Effect Transistor*) our MOS (*Metal Oxyde Secomiconductor*) ou MOSFET. Pour réduire les pertes Joules, l'on vient commander le commutateur 113 au moyen d'une modulation en largeur d'impulsion MLI (ou *Pulse Width Modulation* dans la littérature anglo-saxonne), bien connue d'un homme du métier et similaire à celle que l'on connaît dans les circuits audio de classe D. Cette modulation est générée au moyen d'un circuit PMW 112 commandé lui-même, sur son entrée 111, par un signal de commande.

De tels composants, commutateurs et circuits sont bien connus d'un homme du métier et il ne sera pas nécessaire d'alourdir l'exposé par des développements supplémentaires relatifs à cette modulation.

Un module de commande 120 génère le signal de commande transmis à l'entrée 111 du module de puissance 110 dans le but de venir piloter le circuit PWM 112 pour commander l'intensité lumineuse produite par les LEDs.

Le module de commande comporte un capteur infra-rouge 122 localisé derrière un système d'optique 121 ayant une lentille de Fresnel adaptée pour la focalisation sur la radiation infra-rouge émise par un corps humain, et notamment un visage humain. La figure 1 illustre l'utilisation d'un photocapteur monté en émetteur commun apportant un premier gain en tension mais un homme du métier comprendra aisément qu'il ne s'agit ici que d'un mode de réalisation nullement limitatif. Alternativement, l'on pourra utiliser d'autres circuits permettant de capter ce rayonnement infra-rouge focalisé par la lentille. Dans un mode de réalisation particulier, l'on captera le rayonnement au sein d'un cône ayant un angle de l'odre de 10 à 20 degrés autour de l'axe de la lampe ou de l'axe du capteur infrarouge.

Dans un mode de réalisation particulier, le capteur infra-rouge pourra être un capteur passif de type PIS (*Passive Infra-red Sensor* dans la littérature anglo-saxonne) réalisé au moyen d'un composant crystallin générant une charge électrique de surface lorsqu'il est exposé à une source infra-rouge. Une variation de la radiation infrarouge influe une variation de la quantité de charge, laquelle peut être être mesurée au moyen d'un amplificateur à effet de champ (Field Effect Transistor) par exemple, ou tout circuit adéquat.

De manière générale, le signal capté par le capteur 122 est transmis à un circuit amplificateur 123 assurant, à la fois, une amplification convenable du signal capté mais également un éventuelle filtrage de celui-ci afin de ne retenir que les composantes fréquentielles utiles et dénuée de bruit. En particulier, l'on notera que le détecteur étant sensible à une vaste gamme de fréquences, l'on viendra filtrer le signal capté de manière à ne retenir que les radiations présentant une longueur d'onde dans la gamme 8 à 14mm qui correspond particulièrement à celle du corps humain.

Le circuit amplificateur 123 génère ainsi une composante analogique amplifiée et filtrée du rayonnement infrarouge capté par l'élément 122, laquelle composante est transmise à une première entrée d'un comparateur 124 disposant d'une seconde entrée reçevant un signal de référence Vref. Le comparateur 124 produit alors un signal de sortie qui est transmis via une électrode 126 à une unité de commande 125 capable de traiter ce signal dans le but de générer le signal de commande transmis à l'entrée 111 du module PWM 112.

L'unité de commande 125 pourra être réalisée de multiples manières.

Dans un mode de réalisation particulièrement simple, l'unité de commande comporte un jeu de circuits électroniques permettant d'assurer, dès lors d'une détection d'un rayonnement infrarouge supérieur au seuil fixé par le comparateur 124, une baisse prédéfinie de l'intensité lumineuse générée par les diodes LED.

Dans un mode de réalisation particulier, la baisse de l'intensité lumineuse sera fixée à environ 80-95 pour cent de l'intensité lumineuse maximale, afin d'éviter tout dommage irréparable sur l'oeil d'un sujet humain.

Accessoirement, l'on viendra fixer, au moyen d'un circuit monostable présent au sein de l'unité de commande 125, une durée minimale pendant laquelle la baisse de luminosité restera constante afin d'éviter des phénomènes parasites de clignotement.

Alternativement, l'on pourra venir fixer, au moyen d'un circuit électronique adéquat, un premier profil de baisse de luminosité, suivi ensuite d'un second profil d'accroissement de cette luminosité dès lors que la source infra-rouge aura cessé d'être face au capteur 122.

Comme on le voit, le module de commande comporte un capteur infra-rouge permettant de réaliser une détection infra-rouge suffisamment fiable pour être utilisé par l'unité de commande 125 générant le signal de pilotage transmis sur l'entrée 111 du module PWM 112.

L'on réalise de cette manière un mécanisme de limitation particularièrement avantageux, et économique, de la puissance générée par les diodes LED.

Si l'on connaissait déjà, avec la demande de brevet WO2009FR00447 en date du 16 Avril 2009 (publication WO2009133309 ) déposée par la demanderesse de la présente demande de brevet, un circuit de commande réalisant une commande la détection de la lumière réfléchie par la lampe dans le but d'en réguler la puissance, l'on constate que l'on opère à présent de manière fondamentale **distincte**, et très **avantageux.**

Le module de commande 120 de la figure 1 se **distingue** de celui déjà connu en deux aspects.

En premier lieu, le module de commande 120 est conçu pour capter, non pas une partie de la lumière réfléchie par l'objet éclairé comme c'était le cas dans la demande de brevet WO2009FR00447, mais le rayonnement propre à un objet, à savoir un rayonnement que génère un visage humain dans le spectre infra-rouge.

En second lieu, afin d'assurer une parfaite indépendance entre les flux (de forte intensité) générés par les lampes LED et le (faible) rayonnement émis par le visage humain, l'on utilise des spectres de fréquences particulièrement disjoints. En parituclier, l'on utilise un système optique et des LED générant un rayonnement se situant dans le bleu ou le blanc et ne comportant pas de radiation infrarouge. C'est donc bien le rayonnement émis par un objet situé face à la lampe, et notamment un visage humain, qui sera détecté par le capteur infrarouge.

De cette manière, l'on parvient donc à utiliser d'une manière particulièrement **avantageuse** le faible rayonnement IR émanant d'un visage humain et capté par le détecteur infra-rouge 122.

Bien évidemment, il n'aura pas échappé au lecteur le fait que, si l'utilisateur se tourne vers une source de chaleur, comme un feu de bois ou un poele à bois, le rayonnement infra-rouge émanant par ces derniers sera susceptible de provoquer une baisse de luminosité des LED.

Néanmoins, cet inconvénient sera acceptable eu égard au caractère particulièrement économique de la lampe considérée (cet inconvénient disparaîtra dans les second et troisième mode que l'on rencontrera ci-après) et surtout bien relatif par rapport à l'objectif fixé, à savoir le fait de préserver la vision d'un sujet humain. En outre, on relèvera que, dans certaines situations, la baisse de luminosité pourra assurer une longévité accrue de la batterie, laquelle sera néanmoins bien utile, notamment lorsque l'utilisateur fera face à une source de rayonnement lumineux et infra-rouge important, comme par exemple autour d'un feu de camp.

Par ailleurs, dans un mode de réalisation particulier, le dispositif de sécurité sera débrayable.

Comme on le voit, dans ce premier mode de réalisation, dès lors que le capteur infra-rouge capte une émission d'un rayonnement infrarouge supérieur à un seuil prédéterminé - fixé de manière à correspondre à la détection d'un visage humain situé à une distance approximative égale à 30 à 5 mètres , le module de commande génère un signal de commande à l'attention de l'unité PWM de façon à provoquer une baisse significative de l'intensité lumineuse des LEDs.

Clairement, on pourra envisager d'autres effets accompagnant cette baisse de luminosité. Par exemple, en se référant au contenu de la demande de brevet 06831147 (publication EP1952676) intitulée « ZOOM ELECTRONIQUE » , il sera possible de commander automatiquement la commutation d'un flux étroit vers un flux large de manière à réduire autant que possible la densité de flux lumineux susceptible de frapper la rétine humaine.

Comme on le voit, l'utilisation d'un capteur infra-rouge se prête à de multiples variantes permettant, dans tous les cas, d'accroître significativement la sécurité d'utilisation de la Ilampe.

Le premier mode de réalisation qui vient d'être décrit est particulièrement adapté à la réalisation d'une lampe économique destinée à une fabrication de masse. Comme on a pu le constater, très peu de composants s'avèrent nécessaires pour réaliser cette détection, laquelle peut servir utilement à la commande de l'intensité lumineuse délivrée par les diodes LED.

En revanche, comme on va le constater à présent avec le second mode de réalisation, il pourra être particulièrement avantageux de réaliser, d'emblée, la détection infrarouge et le traitement du signal au moyen d'une architecture numérique à base de microprocesseur.

### II. Description d'un second mode de réalisation : le capteur infra-rouge au sein d'une architecture à base de microprocesseur

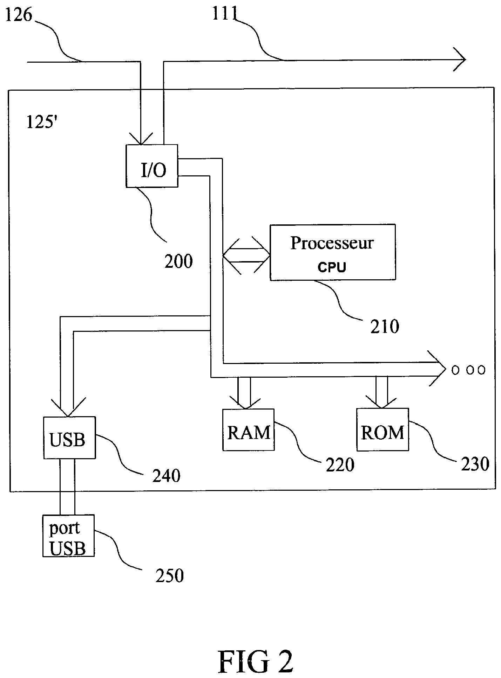

Dans le second mode de réalisation que l'on décrit à présent, et qui est particulièrement illustré dans la figure 2, l'on réalise une unité de commande 125, référencé 125' dans la figure - autour d'une architecture à base de microprocesseur.

L'unité de commande comporte en effet un processeur CPU (*Central Processor Unit* dans la littérature anglo-saxonne) ou processeur d'image 210 ayant accès, via un bus d'adresses, de données et de commande conventionnel à de la mémoire RAM 220, de la mémoire ROM (*Read Only Memory*) ou EEPROM (*Electrically Erasable Programmable Read Only Memory*) pour le stockage d'instructions de commande et de micro-programmes et d'un module d'entrée/sortie 200 permettant l'interfaçage avec des signaux extérieurs, dont notamment le signal de sortie du comparateur 124 sur l'électrode 126 et également le signal de commande du module PWM 112 transmis sur le conducteur 111.

Optionnellement, l'unité de commande 125' sera doté d'un module USB 240 (*Universal Serial Bus*) permettant l'échanges de données via une interface série normalisée 250 suivant le standard.

De cette manière, l'unité de commande peut communiquer avec un dispositif de traitement de données tel qu'un ordinateur ou ordinateur portable.

Une telle communication est utile notamment pour l'échange de données de configuration, tels que des « profils » permettant de venir stocker, en tant que de besoin, des données de réglages de la lampe en fonction de son utilisation souhaitée par son propriétaire. En particulier, la fonction de sécurité pourra être débrayable grâce à l'interfaçage de la lampe via le port USB.

Outre le microcalculateur 210, la mémoire RAM 220, la mémoire ROM 230, l'unité de commande 125' comporte en outre des éléments tampons, des circuits compteurs, des registres annexes bien connus d'un homme du métier, qu'il ne sera pas nécessaire de détailler plus avant.

Comme on le voit, l'unité de commande 125' présente une forme plus sophistiquée que la forme simple décrite en relation avec la figure 1.

Néanmoins, en raison du développement considérable des technologies microélectroniques, l'intégration poussées des composants sur le silicium et la baisse significative des coûts de fabrication, le surcoût pourra rester raisonnable en sorte que l'on pourra envisager de loger les circuits électroniques de l'architecture de la figure 2 même dans les lampes frontales peu onéreuses.

L'on peut même envisager, dans une variante, d'utiliser un capteur infra-rouge générant une information d'emblée numérique qui pourra alors, à l'instant du signal 126 de la figure 2, être directement transmise via le circuit I/O 200 au microprocesseur.

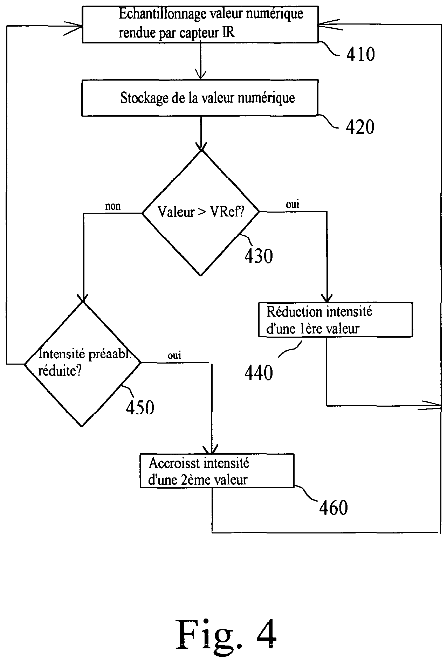

La figure 4 est un exemple de traitement de l'information numérique générée par un tel capteur infrarouge digital.

Dans une étape 410, le processeur 210 effectue un échantillonnage de la valeur numérique générée par le détecteur infra-rouge.

Puis, dans une étape 420, le processeur 210 effectue le stockage de l'information au sein de la mémoire RAM 220, laquelle information pourra servir utilement à des calculs intermédiaires voire même à des fins statistiques .

Puis dans une étape 430, le processeur effectue un test, à savoir une comparaison entre la valeur échantillonnée et stockée une valeur de référence stockée dans la mémoire RAM 220.

Si la valeur générée par le capteur infrarouge excède la valeur de référence, alors le procédé poursuit avec une étape 440 au cours de laquelle le processeur 210 modifie la valeur du signal de commande 111 transmis à l'unité 112 de manière à réduire d'un premier, par exemple 30% , l'intensité générée par les diodes LEDs.

Le procédé retourne ensuite à l'étape 410 pour effectuer un nouvel échantillonnage,

Si, lors du test de l'étape 430, la valeur générée par le capteur infrarouge reste inférieure au seuil préétabli, alors le procédé poursuit avec une étape 450 au cours de laquelle un nouveau test est réalisé pour déterminer si, préalablement, l'intensité lumineuse avait déjà été réduite.

Si le test de l'étape 450 est négatif, alors le procédé retourne à l'étape 410 pour le traitement d'un nouvel échantillon.

Au contraire, si le test de l'étape 450 est positif, alors le procédé poursuit avec une étape 460 au cours de laquelle le processeur 210 modifie la valeur du signal de commande 111 transmis à l'unité PWM 112 de manière à accroître, d'une valeur prédéfinie qui pourra être plus faible que la valeur de 30% évoquée précédemment, l'intensité lumineuse générée par les diodes LED.

Le procédé retourne ensuite à l'étape 410 pour le traitement d'un nouvel échantillon.

Comme on le voit sur cet exemple de la figure 4, l'on parvient à réaliser, très simplement grâce au procédé décrit, une commande de la baisse de l'intensité lumineuse mais également du retour à « la normale » suivant des profils différents.

Dans un mode de réalisation particulier, l'on privilégiera une « baisse rapide » de l'intensité lumineuse, dès la détection d'un rayonnement infra-rouge, de manière à préserver les yeux de l'utilisateur ou d'un tiers et l'on reviendra à « la normale » que progressivement, à la manière de la rétine qui accomode de manière bien distince selon que la luminosité s'accroît ou baisse significativement.

L'architecture basée sur le processeur 210 permet ainsi de multiples fonctionnalités nouvelles, au sein de la lampe frontale, qu'il n'est pas nécessaire de décrire plus avant.

Enfin, dans un troisième mode de réalisation que l'on va décrire à présent, l'on intègre au sein de la lampe frontale une véritable unité de capture et de traitement d'image autorisant des fonctions supplémentaires.

### III. Le troisième mode de réalisation : l'unité de saisie et de traitement d'image

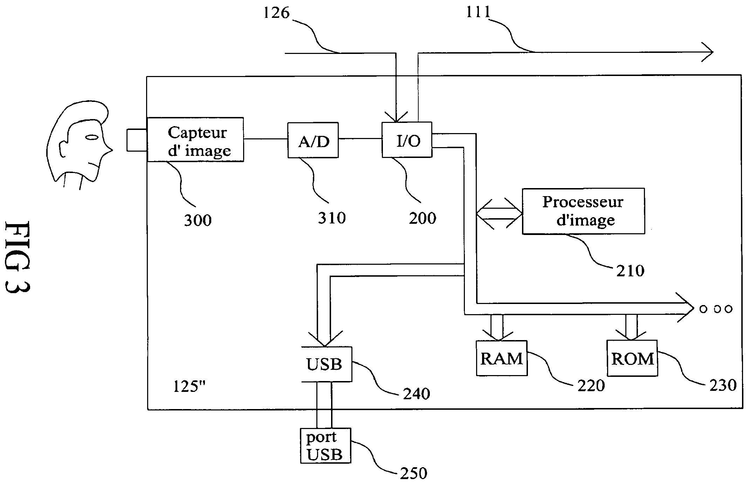

La figure 3 illustre à présent un troisième mode de réalisation qui tire pleinement profit d'une architecture à base de microprocesseur, et qui intègre en outre un module de capture et de traitement d'images.

Dans un souci de simplification de l'exposé, les éléments commun avec l'unité de commande 125' de la figure 2 comportent les mêmes références.

Dans le troisième mode de réalisation, l'unité de commande se présente sous la forme d'une unité 125" dotée du processeur 210 qui pourra être avantageusement un processeur de traitement d'images, communiquant via les bus d'adresses, de données et de commande conventionnel à de la mémoire RAM 220, de la mémoire ROM ainsi qu'au module d'entrée/sortie 200 permettant l'interfaçage avec des signaux extérieurs. Par exemple soit l'information générée par le comparateur 124 soit, alternativement, l'information numérique directement générée par le capteur infra-rouge. Comme dans l'architecture de la figure 2, le module d'entrées/sorties 200 permet de générer le signal de commande transmis sur l'entrée 111 destinée au module PWM. Un port USB 250 est accessible via le module USB connecté au bus.

L'unité de commande 125" comporte en outre un module de traitement d'image basé sur un capteur d'image 300 qui est représentée dans la figure 3 comme un capteur analogique, tel que par exemple un module vidéo ou une caméra analogique, doté de son système optique. L'unité 125" comporte ensuite un convertisseur analogique/numérique 310 permettant la conversion des signaux analogiques générées par la caméra 300 en information numérique qui pourront ensuite être rendues accessibles au processeur d'image 210 via l'unité d'entrée sortie 200.

Dans un mode de réalisation particulier, l'on pourra opter d'emblée pour une structure complètement numérique et substituer à l'ensemble 300-310 un capteur numérique, tel qu'un capteur CCD (*Charge Coupled Device* dans la littérature anglo-saxonne ) bien connu dans le domaine de la photographie numérique. L'on disposera alors directement d'une image pixelisée, par exemple de dimension 640x 480 pixels. Chacun des pixel I(x,y) se verra affectée une valeur représentative de la luminosité de l'image, voire ses composantes de couleurs.

Dans un mode de réalisation préféré, le capteur d'image présente un axe coïncidant avec l'axe des LEDs en sorte que l'image saisie par le capteur 300 correspond à la zone éclairée par ces dernières.

De manière à éviter que l'axe des LED ne vienne frapper la rétine d'un utilisateur ou d'un tiers, le processeur d'image 210 met en oeuvre un programme informatique chargé dans la mémoire 230 et qui prévient, dans la mesure du possible, la rencontre de l'axe de projection du faisceau avec les yeux d'un utilisateur.

Alternativement ou cumulativement, l'on pourra également procéder à la détection d'un visage humain et/ou d'un oeil. Dans un mode de réalisation particulier, le traitement d'images effectué par le module de commande conduira au calcul de la surface relative d'un visage sur l'image pixélisée (par exemple 640x480 pixels), de manière à générer un signal de commande fonction de cette surface relative.

De manière plus fine, l'on pourra se concentrer sur la détection d'un oeil.

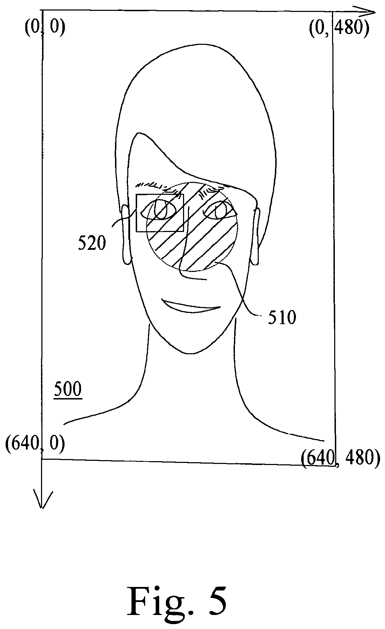

La figure 5 illustre un exemple d'image pixélisée 500 de taille 480x640 montrant un visage comportant deux yeux. Une zone 510 est considérée comme une zone présumée dangereuse car concentrant une grande quantité de rayons lumineux et dans laquelle, dès lors qu'on y détecte un oeil, le procédé décrit ci-après provoque une réduction drastique de l'intensité lumineuse générée par les Led.

De nombreux algorithmes sont connus pour mettre l'identification d'oeil humain, que l'on peut regrouper autour des approches orientées « caractéristiques » (*feature based methods* dans la littérature anglo-saxonne) ou « images » (*images based methods*) et et un homme du métier adaptera les algorithmes disponibles en fonction des spécifications requises pour la réalisation d'une lampe de poche ou d'une lampe frontale.

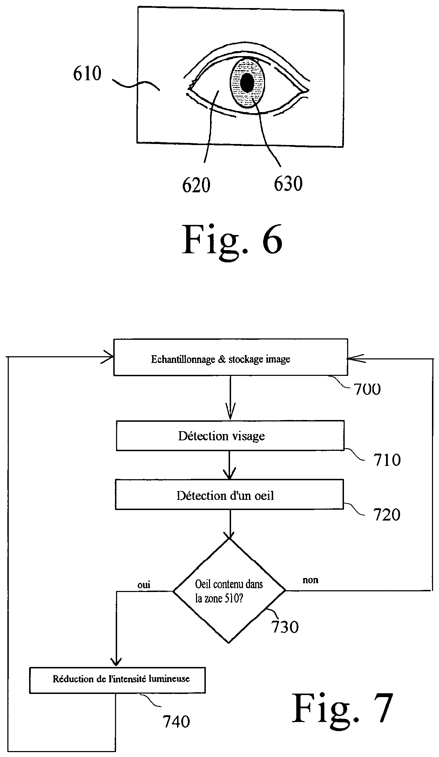

On citera pour exemple le brevet US 6,072,892 délivré le 6 Juin 2000 décrivant une méthode de détection de la position d'un oeil d'une image faciale basé sur l'emploi d'un seuil sur un historgramme d'intensité de l'image dans le but de détecter trois pics au sein de l'historigramme représentatif de la pupille, de la peau et du blanc de l'oeil, chaque pic correspondant aux trois zones 610, 620 et 630 telles que représentées dans la figure 6.

La figure 7 illustre un mode de réalisation d'un procédé de limitation de l'intensité lumineuse générée par les LED.

Le procédé démarre par une étape 700 où, à intervalle régulier, l'on procède à un échantillonnage et au stockage d'une image provenant du capteur d'images.

Puis , dans une étape 710, le procédé poursuit par une détection d'un visage en mettant en oeuvre un algorithme adéquat, tel que, par exemple, basé sur la recherche d'un ovale.

Puis, dans une étape 720, le procédé poursuit par une détection spécifique d'une zone rectangulaire -telle que la zone 520 de la figure 5, susceptible de comporter un oeil. A cet effet, l'on pourra s'inspirer du procédé décrit dans le brevet US 6,072,892 ou de tout autre procédé connu.

Puis le procédé effectue un test dans une étape 730 visant à déterminer si l'oeil détecté se situe à l'intérieur d'une zone présumée dangereuse 510.

Si le test aboutit , cela signifie qu'un oeil est détecté dans la zone dangereuse et le procédé poursuit ensuite par une étape 740 où le processeur génère un signal de commande transmis via le conducteur 111 à l'unité de commande PWM 112 de manière à réduire significative - par exemple de 80 à 90 pour cent - l'intensité lumineuse des diodes LEDs. Le procédé retourne ensuite à l'étape 700 pour un nouvel échantillonnage.

Si le test de l'étape 730 conduit à conclure qu'aucun oeil n'a été détecté, le procédé retourne alors directement à l'étape 700 pour un nouvel échantillonnage.

Le procédé qui vient d'être décrit en relation avec la figure 7 peut être sophistiqué à souhaité, voire combiné avec tout algorithme susceptible d'ajouter des fonctionnalités supplémentaires.

En particulier, le procédé de détection d'image pourra être très avantageusement combiné avec la détection infra-rouge que l'on a décrite en relation avec le premier et le second mode de réalisation.

En effet, le capteur infra-rouge va permettre d'apporter une détection particulièrement rapide d'un visage humain tandis que le traitement d'image va assurer une grande précision dans la détection de manière à éliminer les situations de fausses alertes.

La combinaison des deux effets sera alors particulièrement avantageuse.

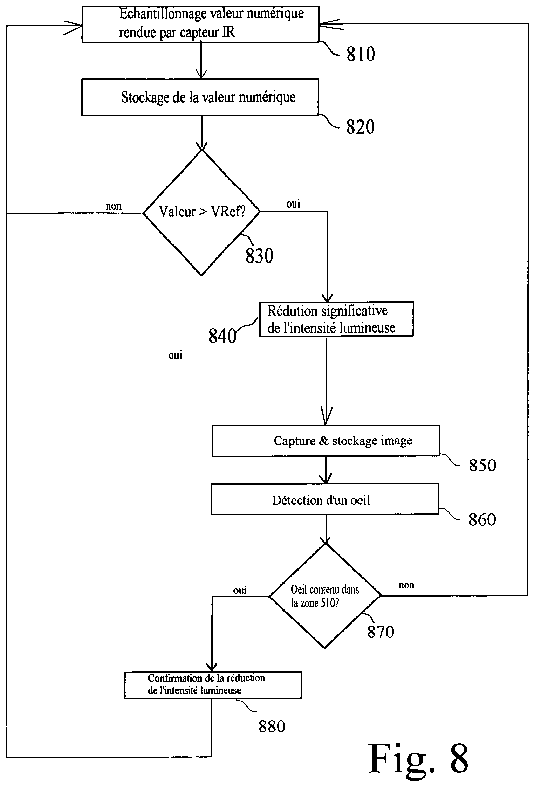

La figure 8 illustre un telle combinaison.

Dans une étape 810, le procédé procède à un échantillonnage de la valeur numérique générée par le capteur infrarouge (éventuellement après conversion analogique-numérique le cas échéant).

Cette valeur numérique est ensuite stockée en mémoire RAM dans une étape 820, notamment pour servir à des calculs intermédiaires ou à des fins statistiques.

Puis, le procédé procède, dans une étape 830, à un test visant à comparer la valeur stockée par rapport à une référence Vref. Il est à noter que la valeur de référence pourra être une valeur prédéterminée fixe ou éventuellement variable, notamment en fonction de résultats de calculs statistiques effectués par le processeur numérique.

Si le test échoue, le procédé retourne à l'étape 810.

Si le test de l'étape 830 conduit à observer que la valeur rendue par le détecteur infrarouge est supérieure à la valeur de référence, le procédé poursuit alors par une étape 840 au cours de laquelle le processeur 210 génère un signal de commande sur le conducteur 111 destiné à réduire de manière significative l'intensité lumineuse générée par les LED.

Puis le procédé procède, dans une étape 850, à la capture et au stockage d'une image générée par le capteur d'image 300.

Le procédé lance ensuite un algorithme de détection de visage au cours d'une étape 860 et plus spécifiquement un algorithme de détection d'un oeil au sein de l'image stockée.
Le procédé poursuit ensuite par une étape 870 qui est un test visant à déterminer si un oeil a été détectée dans la zone présumée dangereuse.

Si le test de l'étape 870 est positif, le procédé poursuit alors avec une étape 880 qui est la confirmation de la réduction de l'intensité lumineuse décidée lors de l'étape 840. Alternativement, ou cumulativement, l'on pourra mettre en oeuvre tout autre mécanisme, tel que par exemple, en se référant au brevet évoqué précédemment (ZOOM ELECTRONIQUE) un élargissement du cône du faisceau lumineux afin de réduire la densité de flux lumineux susceptible de frapper la rétine humaine.

Le procédé retourne alors à l'étape 810 pour un nouvel échantillonnage de l'information détectée par le capteur infrarouge.

Comme on le voit, le détecteur infrarouge se combine particulièrement avantageusement à un procédé de détection d'images pour assurer, d'une part, une grande rapidité de détection et pour bénéficier, d'autre part, de la précision du traitement numérique.

Par ailleurs, un homme du métier aura compris que l'utilisation d'un processeur numérique va permettre également l'ajout de nouvelles fonctionnalités permettant, d'une part, d'accroître encore l'efficacité de la protection offerte par le dispositif (notamment en utilisant différents seuils calculés sur la base d'historiques) mais également , d'autre part, l'ajout de nouvelles fonctionnalités particulièrement avantageuses.

A titre d'exemple, dans un mode de réalisation spécifique, la lampe comporte en outre un logiciel spécifique permettant la reconnaissance du visage d'un utilisateur habituel. Dès lors, il devient alors possible, au moyen d'un test de comparaison entre le visage de l'utilisateur et d'une image stockée, de prévenir une utilisation non autorisée de la lampe. L'on réalise ainsi un dispositif antivol extrêmement efficace puisqu'il ne sera plus possible à un tiers d'utiliser la lampe sans l'autorisation du propriétaire originel qui pourra activer ou désactiver la fonction.

Il est à noter enfin que, bien que le détecteur infra-rouge soit associé au capteur d'images, l'on pourrait envisager, de manière totalement indépendante, un module de commande ne comportant qu'un seul capteur d'images, à l'exclusion de tout détecteur infra-rouge.

## Revendications

1. Lampe d'éclairage portative comportant
- une ou plusieurs diodes LED :
- un module de puissance commandable (113, 112) assurant l'alimentation en courant des lampes LED,
- un module de commande (120) pour le réglage de l'intensité lumineuse générée par la lampe,
**caractérisée en ce que** ledit module de commande comporte un capteur d'image générant des images de la zone éclairée par la lampe, et un processeur procédant à un traitement d'images de manière à détecter la présence d'un oeil au sein d'une zone présumée dangereuse, ledit module de commande (120) générant un signal de commande destiné à réduire l'intensité lumineuse générée par les LED lors de la détection d'un visage humain, et notamment d'un oeil dans ladite zone présumée dangereuse.

2. Lampe d'éclairage portative selon la revendication 1 **caractérisée en ce que** ledit module de commande détermine la surface relative d'un visage sur l'image captée par ledit capteur d'image et procède à une réduction de l'intensité en fonction de la surface relative déterminée.

3. Lampe selon la revendication 1 ou 2 comportant en outre une interface USB pour la connexion à un ordinateur ou un micro-ordinateur.

4. Lampe selon l'une des revendications 1 à 3 **caractérisée en ce que** la baisse de l'intensité lumineuse et le retour à la normale de cette intensité lumineuse suivent des profils distincts commandés par ledit module de commande.

5. Lampe selon l'une des revendications 1 à 4 **caractérisée en ce qu'**une image de référence est stockée au sein de la mémoire accessible au microprocesseur dans le but de stocker une image d'un utilisateur autorisé de la lampe et d'en autoriser le fonctionnement uniquement après comparaison de l'image capturée par ledit capteur avec ladite image de référence.

6. Lampe selon la revendication 1 à 5 comportant en outre un détecteur infrarouge fonctionnant dans un spectre distinct de celui du spectre lumineux des LED, ledit détecteur infrarouge servant à fournir une information supplémentaire destinée au module de commande.

7. Procédé de limitation de la l'intensité lumineuse générée par une lampe comportant une ou plusieurs diodes LED et un module de puissance commandable pour l'alimentation en courant des lampes LED,
ledit procédé étant **caractérisé en ce qu'**il comporte les étapes suivantes:
la capture d'une image au moyen d'un capteur d'image et le traitement de cette image afin de détecter un visage humain dans la zone éclairée par la lampe et plus spécifiquement un oeil susceptible d'être localisé dans une zone présumée dangereusement car recevant une grande densité de flux lumineux, et
en réponse à la détection d'un oeil dans ladite zone, la réduction de la puissance émise par les LED.

8. Procédé selon la revendication 7 **caractérisée en ce qu'**il comporte les étapes :
- la détermination de la surface relative d'un visage sur l'image captée par ledit capteur d'image, et
- une réduction de l'intensité lumineuse fonction de ladite surface déterminée.

9. Procédé selon la revendication 6 ou 7 **caractérisé en ce que** la baisse de l'intensité lumineuse et le retour à la normale de cette intensité lumineuse suivent des profils distincts.

10. Procédé selon l'une des revendications 7 à 9 **caractérisé en ce qu'**il comporte en outre les étapes suivantes :
- stockage d'une image de référence est stockée au sein de la mémoire accessible au microprocesseur correspondant à un utilisateur autorisé de la lampe, et
- autoriser le fonctionnement de la lampe uniquement après comparaison de cette image avec une image capturée par le capteur d'image.

11. Lampe d'éclairage comportant
- une ou plusieurs diodes LED :
- un module de puissance commandable (113, 112) assurant l'alimentation en courant des lampes LED,
- un module de commande (120) pour le réglage de l'intensité lumineuse générée par la lampe,**caractérisé en ce que** la lampe comporte en outre
un détecteur infrarouge fonctionnant dans un spectre distinct de celui utilisée par les LED pour la détection d'un visage humain, ledit détecteur détectant un rayonnement infrarouge émanant d'un visage humain dans la zone éclairée par la lampe et ledit module de commande (120) générant un signal de commande destiné à réduire l'intensité lumineuse générée par les LED lors de la détection d'un visage humain.

12. Lampe selon la revendication 11 **caractérisée en ce que** ledit module de commande (120) comporte une architecture à base de microprocesseur et de mémoire permettant un traitement numérique des informations générées par le détecteur infra-rouge.

13. Lampe selon la revendication 11 ou 12 **caractérisée en ce que** ledit module de commande (120) comporte en outre un capteur d'image générant une image qui est traitée pour générer une information de confirmation de la baisse d'intensité lumineuse des LED.

14. Procédé de limitation de la l'intensité lumineuse générée par une lampe comportant une ou plusieurs diodes LED et un module de puissance commandable pour l'alimentation en courant des lampes LED,
**caractérisé en ce que** ledit procédé comporte les étapes suivantes :
- la détection d'un visage humain dans la zone éclairée par la lampe au moyen d'un capteur infrarouge fonctionnant dans un spectre distinct de celui utilisée par les LEDs, ledit détecteur détectant un rayonnement infrarouge émanant d'un visage humain;
- en réponse à ladite détection, la réduction de l'intensité lumineuse générée par les LED.

15. Procédé selon la revendication 14 **caractérisé en ce qu'**il comporte en outre la capture et le traitement d'une image et **en ce que** la détection infrarouge est utilisée pour provoquer rapidement une baisse d'intensité lumineuse, suivie par une confirmation de cette baisse d'intensité réalisée au moyen d'un traitement numérique de l'image captée par ledit capteur d'image.

## Patentansprüche

1. Tragbare Lampe mit
- einer oder mehreren Leuchtdioden:
- einem steuerbaren Leistungsmodul (113, 112), das die Stromversorgung der LED-Lampen sichert,
- einem Steuermodul (120) zur Regelung der von der Lampe erzeugten Lichtintensität,
**dadurch gekennzeichnet, dass** das Steuermodul einen Bildsensor umfasst, der Bilder des von der Lampe beleuchteten Bereichs erzeugt, und einen Prozessor zur Bilderverarbeitung, um das Vorhandensein eines Auges in einem als gefährlich angenommenen Bereich zu erkennen, wobei das Steuermodul (120) ein Steuersignal erzeugt, um die von der Leuchtdiode erzeugte Lichtintensität bei der Ermittlung eines menschlichen Gesichts, und insbesondere eines Auges in besagtem als gefährlich angenommenen Bereich zu verringern.

2. Tragbare Lampe nach Anspruch 1, **dadurch gekennzeichnet, dass** das Steuermodul die relative Oberfläche eines Gesichts auf dem vom Bildsensor empfangenen Bild bestimmt und eine Reduzierung der Intensität je nach der bestimmten relativen Oberfläche vornimmt.

3. Lampe nach Anspruch 1 oder 2, die außerdem eine USB-Schnittstelle zum Anschluss an einen Computer oder Kleinrechner umfasst.

4. Lampe nach einem der Ansprüche 1 bis 3, **dadurch gekennzeichnet, dass** die Senkung der Lichtintensität und die Rückkehr zur normalen Lichtstärke verschiedenen Profilen folgen, die vom Steuermodul gesteuert werden.

5. Lampe nach einem der Ansprüche 1 bis 4, **gekennzeichnet dadurch, dass** ein Bezugsbild in dem dem Mikroprozessor zugänglichen Speicher gespeichert wird mit dem Ziel, ein Bild eines befugten Nutzers der Lampe zu speichern und ihren Betrieb nur nach Vergleich des vom Sensor aufgenommenen Bildes mit besagtem Bezugsbild zu gestatten.

6. Lampe nach Anspruch 1 bis 5, die außerdem einen Infrarotdetektor umfasst, der in einem anderen Spektrum als dem Lichtspektrum der Leuchtdiode funktioniert, zu dem Zweck, eine zusätzliche Information für das Steuermodul zu liefern.

7. Verfahren zur Begrenzung der von einer Lampe erzeugten Lichtintensität mit einer oder mehreren Leuchtdioden und einem steuerbaren Leistungsmodul für die Stromversorgung der LED-Lampen,
wobei das Verfahren **dadurch gekennzeichnet ist, dass** es die folgenden Schritte umfasst:
Empfang eines Bildes mittels eines Bildsensors und Verarbeitung dieses Bildes, um einen menschlichen Gesicht in dem von der Lampe beleuchteten Bereich zu erkennen,
und insbesondere ein Auge, das in einem als gefährlich angenommenen Bereich, weil er eine große Strahlungsflussdichte aufnimmt, lokalisiert werden könnte, und
als Reaktion auf die Ermittlung eines Auges in besagtem Bereich, die Reduzierung der von der Leuchtdiode abgegebenen Leistung.

8. Verfahren nach Anspruch 7, **gekennzeichnet dadurch, dass** es die folgenden Phasen umfasst:
- die Ermittlung der relativen Oberfläche eines Gesichts auf dem vom Bildsensor empfangenen Bild, und
- eine Reduzierung der Lichtintensität je nach der bestimmten Oberfläche.

9. Verfahren nach Anspruch 6 oder 7, **gekennzeichnet dadurch, dass** die Senkung der Lichtintensität und die Rückkehr zur normalen Lichtstärke verschiedenen Profilen folgen.

10. Verfahren nach einem der Ansprüche 7 bis 9, **gekennzeichnet dadurch, dass** es außerdem die folgenden Schritte umfasst:
- Lagerung eines Bezugsbilds in dem für den Mikroprozessor zugänglichen Speicher, das einem berechtigte Benutzer der Lampe entspricht, und
- den Betrieb der Lampe nur nach Vergleich dieses Bildes mit einem vom Bildsensor aufgenommenen Bild gestatten.

11. Lampe mit
- einer oder mehreren Leuchtdioden:
- einem steuerbaren Leistungsmodul (113, 112), das die Stromversorgung der LED-Lampen sichert,
- einem Steuermodul (120) zur Regelung der von der Lampe erzeugten Lichtintensität,
**gekennzeichnet dadurch, dass** die Lampe außerdem folgendes umfasst einen Infrarotdetektor, der in einem anderen Spektrum als dem der Leuchtdiode funktioniert, zur Ermittlung eines menschlichen Gesichts,
wobei der Detektor eine Infrarotstrahlung, die von einem menschlichem Gesicht stammt, in dem von der Lampe beleuchteten Bereich ermittelt und das Steuermodul (120) ein Steuersignal erzeugt, um die von der Leuchtdiode erzeugte Lichtintensität bei der Ermittlung eines menschlichen Gesichts zu verringern.

12. Lampe nach Anspruch 11, **dadurch gekennzeichnet, dass** das Steuermodul (120) eine Architektur auf der Grundlage von Mikroprozessor und Speicher umfasst, wodurch eine digitale Verarbeitung der vom Infrarotdetektor erzeugten Informationen möglich wird.

13. Lampe nach Anspruch 11 oder 12, **dadurch gekennzeichnet, dass** das Steuermodul (120) außerdem einen Bildsensor umfasst, der ein Bild ermittelt, das verarbeitet wird, um eine Information zur Bestätigung der Senkung der Lichtintensität der Leuchtdioden zu erzeugen.

14. Verfahren zur Begrenzung der von einer Lampe erzeugten Lichtintensität mit einer oder mehreren Leuchtdioden und einem steuerbaren Leistungsmodul für die Stromversorgung der LED-Lampen, **gekennzeichnet dadurch, dass** besagtes Verfahren die folgenden Schritte umfasst:
- die Ermittlung eines menschlichen Gesichts in dem von der Lampe beleuchteten Bereich mittels eines Infrarotsensors, der in einem anderen Spektrum als dem der Leuchtdioden funktioniert, wobei der Detektor eine Infrarotstrahlung ermittelt, die von einem menschlichen Gesicht stammt;
- als Reaktion auf besagte Ermittlung, die Reduzierung der von der Leuchtdiode erzeugten Lichtintensität.

15. Verfahren nach Anspruch 14, **gekennzeichnet dadurch, dass** es außerdem die Erfassung und Verarbeitung eines Bildes umfasst sowie dadurch, dass die Infrarotermittlung benutzt wird, um schnell eine Lichtintensitätssenkung zu bewirken, gefolgt von einer Bestätigung dieser Senkung der Intensität mittels einer digitalen Verarbeitung des empfangenen Bildes durch den Bildsensor.

## Claims

1. Portable lighting lamp comprising
- one or more LEDs:
- a controllable power unit (113, 112) providing power to the LEDs,
- a control unit (120) for adjusting the light generated by the lamp,
**characterized in that** said control unit includes an image sensor generating images of the area illuminated by the lamp, and a processor for processing images so as to detect the presence of an eye in a presumably dangerous area, said control unit (120) generating a control signal for reducing the amount of light generated by the LEDs upon detection of a human face, in particular of an eye in said presumably dangerous area.

2. Portable lighting lamp according to claim 1 **characterized in that** said control unit determines the relative surface of a human face on the image captured by said image sensor and performs a reduction of the intensity in accordance with the determined relative surface.

3. Lamp according to claim 1 or 2 further comprising a USB interface for the connection to a computer or a microcomputer.

4. Lamp according to anyone of claims 1 to 3 **characterized in that** the decrease of the light intensity and the return to normal intensity of the light is performed with distinct profiles under control of said control unit.

5. Lamp according to anyone of claims 1 to 4 **characterized in that** a reference image is stored within the memory accessible to the microprocessor in order to store an image of an authorized user of the lamp, and to allow the operation only after comparing the image captured by said sensor with said reference image.

6. Lamp according to Claims 1 to 5 further comprising a infrared detector operating in a spectrum distinct from that of the LED, said infrared detector providing additional information to the control unit.

7. A process for limiting the intensity of light generated by a lamp comprising one or more LEDs and a controllable power unit for supplying current to the LEDs, said process being **characterized in that** it comprises the following steps:
capturing an image by means of an image sensor and the processing of such image so as to detect a human face within an area illuminated by the lamp and more specifically an eye likely to be located in an presumably dangerous area for receiving a high density of luminous flux, and
in response to detection of an eye in said region, reducing the power emitted by the LED.

8. Process according to claim 7 **characterized in that** it comprises the steps of:
- determining the relative area of a human face on the image captured by said image sensor, and
- reducing the light intensity based on said determined surface area.

9. Process according to claim 6 or 7 **characterized in that** the decrease of the light intensity and the return to normal intensity of the light is performed with distinct profiles.

10. Process according to anyone of claims 7 to 9 **characterized in that** it further comprises the steps of:
- storing a reference image within the memory accessible to the microprocessor corresponding to an authorized user of the lamp, and
- authorizing the operation of the lamp only after a comparison of such image with the image captured by the image sensor picture.

11. Lighting lamp comprising
- one or more LEDs:
- a controllable power unit (113, 112) ensuring the power supply to the LED lamps,
- a control unit (120) for adjusting the light generated by the lamp,
**characterized in that** the lamp further includes:
an infrared sensor operating within a spectrum distinct from that used by the LED for the detection of a human face, said sensor detecting an infrared radiation emitted by a human face within the area illumated by the lamp and said said control unit (120) generating a control signal for reducing the amount of light generated by the LEDs upon detection of a human face.

12. Lamp according to claim 11 **characterized in that** said control unit (120) includes a microprocessor-based architecture with digital memory for processing the information generated by the infrared detector.

13. Lamp according to claim 11 or 12 **characterized in that** said control unit (120) further comprises an image sensor generating an image that is processed to generate a confirmation information of the reduction of the light of the LEDs.

14. A process for limiting the intensity of light generated by a lamp comprising one or more LEDs and a controllable power unit for supplying current to the LED lamps, **characterized in that** said process comprises the following steps:
- detecting a human face within the area illuminated by the lamp by means of an infrared sensor operating within a spectrum distinct from that used by the LEDs, said sensor detecting an infrared radiation generated by a human face;
- in response to said detection, reducing the amount of light generated by the LED.

15. Process according to claim 14 **characterized in that** it further comprises capturing and processing an image, and **in that** the infrared detection is used to cause a rapid decrease in light intensity, followed by a confirmation of the decrease of the light performed by means of digital processing of the image captured by said image sensor.
